# EUROPÄISCHE PATENTSCHRIFT

(11) **EP 2 401 085 B1**
(45) Veröffentlichungstag und Bekanntmachung des Hinweises auf die Patenterteilung: **08.06.2016**
(21) Anmeldenummer: 10703629.5
(22) Anmeldetag: 10.02.2010
(51) Int. Cl.: B03D 1/008, C01D 3/08, B03D 103/10, B03D 101/02, B03D 101/04, B03D 1/016, B03D 1/004

(54) **SCHÄUMER UND VERFAHREN ZUR FLOTATION UNLÖSLICHER BESTANDTEILE VON KALIROHSALZEN**
COLLECTOR AND PROCESS FOR THE FLOTATION OF INSOLUBLE COMPOUNDS IN POTASSIUM ORES
AGENT MOUSSANT ET PROCÉDÉ DE FLOTTATION DE CONSTITUANTS INSOLUBLES DE SELS POTASSIQUES BRUTS

(30) Priorität: 24.02.2009 DE 102009010293
(43) Veröffentlichungstag der Anmeldung: 04.01.2012
(73) Patentinhaber: CLARIANT INTERNATIONAL LTD, 4132 Muttenz (CH)
(72) Erfinder: PEDAIN, Klaus-Ulrich, 63128 Dietzenbach-Steinberg (DE)
(74) Vertreter: Mikulecky, Klaus
(86) Internationale Anmeldenummer: PCT/EP2010/000814
(87) Internationale Veröffentlichungsnummer: WO 2010/097165

(56) Entgegenhaltungen:
- DE-B- 1 054 392
- DE-B- 1 275 973
- DE-C1- 10 217 693
- FR-A- 1 068 017
- KOEHLER HELMUT; KRAMER WOLFGANG: "Reagent Systems for the Flotation of Soluble Salts." NEUE BERGBAUTECHNIK, Bd. 11, Nr. 6, Juni 1981 (1981-06), Seiten 362-366, XP009133647 ISSN: 0047-9403
- Kaliverein e.V.: "Kali und Steinsalz" Nr. 3, 2004, Seiten 1-51, XP002582898 ISSN: 1614-1210 Gefunden im Internet: URL:www.vks-kalisalz.de/images/pdfs/3_04_K &Stein.pdf [gefunden am 2010-05-19]

## Beschreibung

Die Erfindung betrifft die Flotation von Kalirohsalzen und insbesondere einen Sammler und ein Verfahren zur Schaumaufbereitung von unlöslichen Teilen von Sylvinit.

Eine Methode zur Anreicherung des Sylvins aus Sylvinit ist die Flotation. In diesem Prozess wird das Rohsalz nach der Vermahlung und evtl. nachfolgender elektrostatischer Abscheidung von Kieserit in einer gesättigter Salzlauge suspendiert. Diese Flotationstrübe wird anschließend in einer Konditionierstufe mit dem Sammler, einem primären Alkylamin, der hauptsächlich in Form eines Hydrochlorids verwendet wird, und mit einem Schäumer, beispielsweise mit Pineöl oder Methyl-isobutyl-carbinol, konditioniert. In der anschließenden Flotation wird das hydrophobierte KCl in der Schaumphase von der Flotationstrübe separiert und durch Abschöpfen des Schaums als Konzentrat gewonnen.

Kalirohsalze enthalten außer Sylvin (KCl), Halit (NaCl) und anderen Salzen zumeist wasserunlösliche Bestandteile, nachfolgend als "Ton" benannt, der sich in der Flotationstrübe als sogenannter "Schlamm" verteilt. Dieser wirkt sich negativ auf die KCl-Flotation aus, indem er den Sammlerverbrauch signifikant erhöht, sowie das KCI-Flotationsausbringen und den KCl-Gehalt im Flotationskonzentrat vermindert. Es ist daher üblich, die tonigen Bestandteile vor der Sylvinflotation auf nassmechanischem Wege, wie durch einen Hydrozyklon, aus der Trübe zu entfernen, und anschließend Reste des Tones, der auf diesem Wege nicht separiert werden kann, durch Zugabe eines sogenannten "Drückers" zu passivieren, so dass der Ton vom Flotationssammler nicht hydrophobiert wird und sich nicht in der Schaumphase anreichert. Als Drücker wird üblicherweise Guar, der in verschiedenen Typen erhältlich ist, oder Carboxymethylcellulose verwendet.

Dieses zuvor beschriebene Verfahren eignet sich sehr gut für die flotative Aufbereitung von Sylvinit, welches nur geringe Tonanteile enthält. Bei hohem Tongehalt reicht die nassmechanische Abtrennung und die Passivierung des Tones durch Zugabe von Drücker in die Flotationstrübe nicht mehr aus, um dessen negativen Einfluss auf die Flotation des Sylvins zu verhindern.

Im Stand der Technik wurden unterschiedliche Wege beschritten, die unlöslichen Bestandteile vor der Sylvinflotation abzutrennen.

Nach DE-3 441 910 werden die unlöslichen Bestandteile aus Kalirohsalzen durch Flotation, unter Verwendung einer geringen Zugabe eines primären- oder sekundären aliphatischen Amins oder eines primären aliphatischen Ether-Amins als Sammler, in Kombination mit einem Flockungsmittel, entfernt. Im Falle eines primären aliphatischen Amins kann der Sammler der gleiche sein, wie derjenige, der in der anschließenden Flotation zur Gewinnung von KCl aus dem Rohsalz eingesetzt wird.

US-4 192 737 offenbart, die unlöslichen Bestandteile aus Kalirohsalzen durch ein Flotationsverfahren zu entfernen. Dazu wird das Kalirohsalz mit einem Flockungsmittel behandelt, welches ein nichtionisches oder ein kationisches Acrylamidpolymer umfasst und anschließend mit einem nichtionischem oder anionischem Sammler in Mischung mit Heizöl oder mit einer Fettsäure und einem mit Entschäumer eines Glykol-Ester- oder Polyglykol-Ester-Typs flotiert wird. Die geflockten Schlämme können aber auch alleine mit der Fettsäure bei niedrigem pH-Wert der Flotationstrübe flotiert werden.

US-4 533 465 offenbart ein Verfahren zur Sylvinifflotation, bei der ein synthetisches Polymer als Drücker verwendet wird. Das synthetische Polymer umfasst Struktureinheiten von Acrylsäure und Acrylamid.

DE 102 17 693 offenbart eine Sylvinitflotation mit einer Mischung aus einem Alkylaminsalz und einer verzweigten Fettsäure als Sammler, wobei der Sammler zur besseren Handhabung in Glykolen, insbesondere Butylpolyglykol oder Rückständen aus der Oxoalkylsynthese gelöst wird.

Aufgabe vorliegender Erfindung ist es, ein Verfahren zur Abtrennung der unlöslichen Bestandteile der Sylvinitflotation zur Verfügung zu stellen, bei dem weniger Sylvin zusammen mit den unlöslichen Bestandteilen ausflotiert wird, und Sylvinit und unlösliche Bestandteile zusätzlich effektiver separiert werden. Eine weitere Aufgabe ist es, ein Verfahren zur Sylvinitflotation zu finden, bei dem die unlöslichen Bestandteile weniger Einfluss auf die Sammlereffizienz ausüben.

Überraschenderweise hat sich gezeigt, dass die unlöslichen Bestandteile flotiert werden können, indem diese zuerst mit einem nichtionischen Flockungsmittel geflockt und diese Flocken anschließend mit einem Schäumer, enthaltend bestimmte Ether und/oder Ester, flotiert werden.

Gegenstand der Erfindung ist damit ein Verfahren zur Abtrennung unlöslicher Bestandteile aus Sylvinit, indem der Sylvinit in gesättigter Salzlauge suspendiert wird, der Suspension ein Flockungsmittel zugesetzt wird, und der so erhaltenen Zusammensetzung sodann ein Schäumer zugesetzt wird, der mindestens einen Ether und/oder Ester enthält, wobei
a) die Ether der Formel 1 entsprechen

   R-O-R' (1)

   worin R für lineare oder verzweigte Alkyl- oder Alkenylgruppen mit 2 bis 30 Kohlenstoffatomen und R' für lineare oder verzweigte Alkyl- oder Alkenylgruppen mit 1 bis 30 Kohlenstoffatomen steht,
b) die Ester sich von ein- oder mehrwertigen Carbonsäuren mit 2 bis 30 Kohlenstoffatomen (Säurerest) und von ein- oder mehrwertigen Alkoholen mit 1 bis 30 Kohlenstoffatomen (Alkoholrest) ableiten, oder
c) die Ether und/oder Ester cyclisch sind, wobei die Ringgröße von 6 bis 30 Kohlenstoffatomen beträgt.

Ein weiterer Gegenstand der Erfindung ist ein Verfahren zur Flotation von Sylvinit, umfassend
A) Abtrennung unlöslicher Bestandteile des Sylvinits, indem der Sylvinit in einer gesättigten Salzlösung suspendiert wird, der Suspension ein nichtionisches Flockungsmittel zugesetzt wird, und der so erhaltenen Zusammensetzung sodann ein Schäumer zugesetzt wird, der mindestens einen Ether und/oder Ester enthält, wobei
   a) die Ether der Formel 1 entsprechen

      R-O-R' (1)

      worin R für lineare oder verzweigte Alkyl- oder Alkenylgruppen mit 2 bis 30 Kohlenstoffatomen und R' für lineare oder verzweigte Alkyl- oder Alkenylgruppen mit 1 bis 30 Kohlenstoffatomen steht,
   b) die Ester sich von ein- oder mehrwertigen Carbonsäuren mit 2 bis 30 Kohlenstoffatomen (Säurerest) und von ein- oder mehrwertigen Alkoholen mit 1 bis 30 Kohlenstoffatomen (Alkoholrest) ableiten, oder
   c) die Ether und/oder Ester cyclisch sind, wobei die Ringgröße von 6 bis 30 Kohlenstoffatomen beträgt, und
B) Flotation des Sylvins durch Zugabe eines Sammlers und Schäumers für die Sylvinitflotation.

Ein weiterer Gegenstand der Erfindung ist die Verwendung einer Zusammensetzung als Schäumer für die Flotation der unlöslichen Bestandteile des Sylvinits, wobei die Zusammensetzung mindestens einen Ether und/oder Ester enthält, wobei
a) die Ether der Formel 1 entsprechen

   R-O-R' (1)

   worin R für lineare oder verzweigte Alkyl- oder Alkenylgruppen mit 2 bis 30 Kohlenstoffatomen und R' für lineare oder verzweigte Alkyl- oder Alkenylgruppen mit 1 bis 30 Kohlenstoffatomen steht,
b) die Ester sich von ein- oder mehrwertigen Carbonsäuren mit 2 bis 30 Kohlenstoffatomen (Säurerest) und von ein- oder mehrwertigen Alkoholen mit 1 bis 30 Kohlenstoffatomen (Alkoholrest) ableiten, oder
c) die Ether und/oder Ester cyclisch sind, wobei die Ringgröße von 6 bis 30 Kohlenstoffatomen beträgt.

Das erfindungsgemäße Verfahren wird im Folgenden näher beschrieben.

Es wird in bevorzugter Ausführungsform ein Verfahren zur Flotation von unlöslichen Teilen aus einem Kalirohsalz (Sylvinit) zur Verfügung gestellt, wobei das Kalirohsalz in gesättigter Salzlauge suspendiert wird, die Rohsalztrübe mit dem erfindungsgemäßen Schäumer für unlösliche Teile konditioniert wird, wobei der erfindungsgemäße Schäumer für die unlöslichen Bestandteile in einer Menge von vorzugsweise mindestens 0,4 g Schäumer pro Tonne Rohsalz zugesetzt wird, und wobei ein geeignetes Flockungsmittel in einer Menge von vorzugsweise mindestens 0,1 g Flockungsmittel pro Tonne Rohsalz zugesetzt wird, die konditionierte Rohsalztrübe einer Schaumaufbereitung unterworfen wird, und die flotierten unlöslichen Teile entfernt werden. Insbesondere umfasst das Verfahren zur Flotation der unlöslichen Teile von Kalirohsalz die Stufen des Suspendierens des Rohsalzes in gesättigter Salzlösung, das Konditionieren des Rohsalzes mit dem erfindungsgemäßen Schäumer für die unlöslichen Bestandteile, der in einer Menge von mindestens 0,4 g Schäumer pro Tonne Rohsalz zugesetzt wird und ein geeignetes Flockungsmittel in einer Menge von mindestens 0,1 g pro Tonne Rohsalz zugesetzt wird und Entfernung der unlöslichen Teile durch Flotation der Rohsalztrübe.

Daneben wird ein Verfahren zur Flotation von Sylvin aus Kalirohsalzen einschließlich der Verwendung von primären aliphatischen Aminen als Sammler für Sylvin zur Verfügung gestellt, wobei die Amine eine Anzahl von Kohlenstoffatomen im Bereich von 8 bis 24 aufweisen und entweder als Salz einer anorganischen Säure, wie beispielsweise HCl, oder als Salz einer Carbonsäure mit einer Anzahl von Kohlenstoffatomen von 1 bis 18 und in einer Menge im Bereich von 5 bis 500 g Sammler pro Tonne Rohsalz eingesetzt werden, wobei das Verfahren dadurch gekennzeichnet ist, dass die unlöslichen Teile von dem Kalirohsalz vor der Flotation des Sylvins durch Schaumaufbereitung der unlöslichen Teile in Gegenwart des erfindungsgemäßen Schäumers in einer Menge im Bereich von 0,4 bis 150 g Schäumer pro Tonne Rohsalz und in Gegenwart eines Acrylamidpolymer-Flockungsmittels in einer Menge von mindestens 0,1 g Flockungsmittel pro Tonne Rohsalz entfernt werden.

Der Schäumer enthält Ester, oder Ether oder Ester und Ether wie sie oben definiert sind.

Unter "ableiten" ist vorliegend zu verstehen, dass die die Ester durch die Reaktion von ein- oder mehrwertigen Carbonsäuren mit 2 bis 30 Kohlenstoffatomen mit ein- oder mehrwertigen Alkoholen mit 1 bis 30 Kohlenstoffatomen erhalten werden können.

R sowie der Säurerest stehen vorzugsweise für lineare oder verzweigte Alkyl- oder Alkenylgruppen mit mindestens 4, insbesondere mindestens 5 bis 22 Kohlenstoffatomen. R' sowie der Alkoholrest stehen vorzugsweise für lineare oder verzweigte Alkyl- oder Alkenylgruppen mit mindestens 2, insbesondere mindestens 4 bis 22 Kohlenstoffatomen. Die Alkohole enthalten vorzugsweise nicht mehr OH-Gruppen als Kohlenstoffatome.

Als Beispiele für Ether seien Dihexylether, Dioctylether, Di-(2-Ethylhexyl)ether, als Beispiele für Ester seien Ölsäure-Eicosylester, 2-Ethylhexylstearat, 2-Ethylhexylsäure-butyrat, Octansäureethylester, Hexansäureethylester, 2-Ethylhexylsäurebutylester, 2-Ethylhexylbutyrat und 2-Ethylhexylsäure-2-Ethylhexylester genannt.

In einer weiteren bevorzugten Ausführungsform der Erfindung bilden R und R' bzw. der Säure- und der Alkoholrest einen Ring mit 8 bis 22 Ringgliedern.

Enthält der Schäumer Ester, so ist die Verwendung von Mono- und Diestern von sowohl Dialkoholen als auch Dicarbonsäuren bevorzugt. Als Beispiele für Ester seien Adipinsäure-di(2-Ethylhexyl-ester), 2-Ethylhexandiol-(1,3)-mono-n-butyrat, 2-Ethylhexandiol-(1,3)-di-n-butyrat genannt. Im Fall der Verwendung von Dicarbonsäuren oder Dialkoholen sind die Säure- bzw. Alkoholreste Alkylen- oder Alkenylengruppen.

In einer weiteren bevorzugten Ausführungsform enthält der Schäumer neben mindestens einem Ether und/oder Ester noch mindestens einen Alkohol, der einen Kohlenwasserstoffrest von 6 bis 16 Kohlenstoffatomen trägt, und/oder mindestens ein Polypropylenglykol.

Der Alkohol entspricht vorzugsweise der Formel R¹(OH)_{y}, worin R¹ für eine C₆- bis C₁₆-Kohlenwasserstoffgruppe und y für 1, 2, 3, 4, 5 oder 6 steht.

Vorzugsweise handelt es sich bei dem Alkohol um einen Monoalkohol oder um ein Diol. Vorzugsweise handelt es sich bei dem Kohlenwasserstoffrest um einen Alkylrest oder Alkylenrest, der linear oder verzweigt sein kann. Besonders bevorzugt enthält der Kohlenwasserstoffrest 8 bis 14 Kohlenstoffatome. Besonders bevorzugte Alkohole sind 2-Ethylhexanol und 2-Ethylhexandiol-(1,3).

In einer besonders bevorzugten Ausführungsform enthält der Schäumer Alkohol und Ether und Ester enthaltende Mischungen, wie sie beispielsweise als Nebenprodukt bei der Oxosynthese entstehen.

In einer weiteren bevorzugten Ausführungsform der Erfindung wird ein aus der Oxosynthese stammendes, hier im Folgenden als MS bezeichnetes Stoffgemisch als Schäumerbestandteil zugesetzt.

MS ist eine Mischung aus einer Reihe von aliphatischen und cyclischen, nichtaromatischen Kohlenwasserstoffen. Die Hauptbestandteile von MS können folgender Tabelle entnommen werden:

| Bestandteil | Konzentrationsbereich (Gew.-%) |
|---|---|
| Di-2-ethylhexylether | 10-25 |
| 2-Ethylhexylsäure-2-Ethylhexylester | 10-25 |
| C₁₆-Lactone | 4-20 |
| 2-Ethylhexylbutyrat | 3-10 |
| 2-Ethylhexandiol-(1,3)-mono-n-butyrat | 5-15 |
| 2-Ethylhexanol | 4-10 |
| C₄- bis C₆-Acetate | 2-10 |
| 2-Ethylhexandiol-(1,3) | 2-5 |
| Ether und Ester > C₂₀ | 0-20 |

Ein weiterer bevorzugter Bestandteil des Schäumers ist Polypropylenglykol. In einer bevorzugten Ausführungsform handelt es sich dabei um ein Polypropylenglykol mit einem zahlenmittleren Molekulargewicht von 100 bis 5.000 g/mol, insbesondere 200 bis 2.000 g/mol, speziell bis zu 1.000 g/mol.

Das Mischungsverhältnis von Ester/Ether und ggf. Alkohol zu Polypropylenglykol liegt vorzugsweise zwischen 1:10 und 10:1, insbesondere zwischen 2:1 und 4:1, speziell bei 3:1 nach Gewicht. Das Mischungsverhältnis von Ester/Ether zu Alkohol liegt vorzugsweise zwischen 99:1 bis 1:99.

Der Schäumer wird vorzugsweise in Kombination mit einem geeigneten Flockungsmittel verwendet, um die Flotation der unlöslichen Teile zu bewirken. Das Flockungsmittel kann vor der Zugabe des Schäumers oder zusammen mit dem Schäumer zugesetzt werden. Geeignete Flockungsmittel sind beispielsweise Acrylamidpolymere. Es ist möglich andere Flockungsmittel als Acrylamidpolymere, die in ähnlicher Weise wirksam sind, zu verwenden. Die Verwendung von Acrylamidpolymeren als Flockungsmittel ist bevorzugt. Das Flockungsmittel wird vorzugsweise in einer Menge von mindestens 0,1 g/t zugesetzt. Die Menge an Acrylamidpolymer-Flockungsmittel wird vorzugsweise in einer Menge im Bereich von 5 bis 60 g/t Rohsalz zugesetzt, besonders bevorzugt in einer Menge im Bereich von 5 bis 10 g/t Rohsalz. Wenn es gewünscht wird, können Mengen von mehr als 60 g/t eingesetzt werden.

Die Flotation von unlöslichen Teilen kann in einer oder in zwei Stufen durchgeführt, vorzugsweise in zwei aufeinander folgenden Stufen, worin eine Menge von Schäumer für unlösliche Teile in dem Bereich von 10 bis 50 g/t und eine Menge von Acrylamidpolymer-Flockungsmittel im Bereich von 5 bis 10 g/t in der ersten Stufe zugesetzt werden, und eine Menge von Schäumer für unlösliche Teile im Bereich von 10 bis 20 g/t und eine Menge von Acrylamidpolymer-Flockungsmittel im Bereich von 5 bis 10 g/t in der zweiten Stufe zugesetzt werden.

Kalirohsalz (potash ore), wie Sylvinit, welches üblicherweise Sylvin, Halit und in Abhängigkeit von dem Rohsalz in variierenden Mengen unlösliche Teile enthält, wird zerkleinert und das zerkleinerte Rohsalz wird in ein Aufschlämmungs-Gefäß eingespeist, wo gesättigte Salzlösung, die üblicherweise von anderen Sylvinit-Verfahrensschritten rückgeführt wird, zugesetzt wird, um eine Salztrübe herzustellen, die einem Reinigungsverfahren unterworfen wird, um die unlöslichen Bestandteile aus dem Rohsalz freizusetzen. Die Rohsalztrübe aus dem Reinigungverfahren wird sodann in eine Konditionierungsvorrichtung für die unlöslichen Teile eingespeist.

Der Konditionierungsvorrichtung wird der Schäumer für die unlöslichen Bestandteile zugesetzt. Der Schäumer wird vorzugsweise unverdünnt zugegeben. Der Schäumer kann aber auch beispielsweise als eine 0,1 bis 1 %ige wässrige Lösung zugegeben werden. Die wirksame Menge an Schäumer, die zugegeben werden muss, variiert mit der Menge an unlöslichen Teilen in dem Rohsalz, und allgemein wird der Schäumer für die unlöslichen Bestandteile in die Konditionierungsvorrichtung in einer Menge von mindestens 0,4 g/t Rohsalz zugesetzt. Die Zugabe von geringeren Mengen als 0,4 g/t führt zum Verbleib eines hohen Restbestandes an unlöslichen Teilchen in dem Rohsalz, welches hohe Zugaben an Sylvinsammler in der anschließenden Sylvinflotation erfordert. Die Zugabe von größeren Mengen als 150 g/t führt zu hohem Sylvin-Verlust in der Flotation der unlöslichen Bestandteile. Die besten Ergebnisse werden mit Mengen des Schäumers im Bereich von 20 bis 50 g/t Rohsalz, vorzugsweise mit einer Menge im Bereich von 20 bis 40 g/t Rohsalz erzielt; die besonders bevorzugte Menge liegt bei 30 g/t.

Es wurde gefunden, dass die Zugabe eines Sammlers bei der Flotation der unlöslichen Bestandteile allgemein nicht erforderlich ist.

Nach geeigneter Behandlung und Konditionierung der Rohsalztrübe mit dem Schäumer und dem Flockungsmittel wird die konditionierte Rohsalztrübe einer Schaumaufbereitung unterworfen, wodurch die unlöslichen Bestandteile als ein Konzentrat flotiert werden und die Flotationsberge (tailings) den größten Teil des Sylvins und einen Rest an unlöslichen Bestandteilen enthält.

Die Flotationsberge aus der Flotation der unlöslichen Bestandteile werden nacheinander mit einem geeigneten Drücker (depressing agent) versetzt, wie beispielsweise Stärke oder Guar, um den Rest an unlöslichen Bestandteilen zu inaktivieren, und werden mit einer geeigneten Menge eines Sammlers für Sylvin und mit einer geeigneten Menge eines Schäumers für Sylvin konditioniert.

Die konditionierten Flotationsberge werden sodann in den KCI-Flotationskreislauf eingespeist und der Flotation zur Gewinnung von Sylvin unterworfen.

Der Sylvin-Sammler kann in bevorzugter Ausführungsform ein Amin-Sammler sein.

Der Amin-Sammler kann ausgewählt sein aus der Gruppe von aliphatischen Aminen, die aus primären aliphatischen Aminen, sekundären aliphatischen Aminen und primären Ether-aliphatischen Aminen bestehen. Der primäre aliphatische Amin-Sammler kann eine einzelne Verbindung sein, ist jedoch üblicherweise ein Gemisch von Aminen, die eine Anzahl von Kohlenstoffatomen im Bereich von 8 bis 24 aufweisen.

Beispielsweise sind primäre aliphatische Amine, wie diejenigen, die unter den Marken Genamin SH 100^{®} und Flotigam V 5070^{®} vertrieben werden, die Amine mit Kohlenstoffatomen im Bereich von 12 bis 24 umfassen, geeignet für die selektive Flotation von Kalirohsalz.

Jeder Konditionierungsstufe wird eine Menge an erfindungsgemäßen Schäumer für die unlöslichen Bestandteile und eine Menge eines Flockungsmittels zugegeben. Ein Konzentrat der unlöslichen Bestandteile wird aus jeder Flotationsstufe erhalten. Die Konzentrate der unlöslichen Bestandteile werden einem Eindicker zugeführt und die Flotationsberge aus der zweiten Stufe der Flotation der unlöslichen Bestandteile werden dem Sylvinit-Flotationskreislauf zur Trennung von Sylvin von anderen Kali-Rohsalzkomponenten zugeführt.

In der Zweistufen-Flotation für die unlöslichen Bestandteile nach diesem bevorzugten Ausführungsbeispiel wird gereinigte Rohsalzpulpe in einer ersten Konditionierungsstufe mit dem Schäumer für unlösliche Bestandteile mit einem Acrylamidpolymer-Flockungsmittel konditioniert. Die konditionierte Rohsalztrübe wird der ersten Stufe der Schaumaufbereitung zur Entfernung eines ersten Konzentrats, welches unlösliche Bestandteile enthält, unterworfen. Die Flotationsberge aus der Schaumaufbereitung der ersten Stufe werden mit einer zweiten Menge des Schäumers und einer zweiten Menge eines Acrylamidpolymer-Flockungsmittels konditioniert und die so konditionierte Trübe wird der Schaumaufbereitung der zweiten Stufe unterworfen. Ein zweites Konzentrat an unlöslichen Bestandteilen wird entfernt und zusammen mit dem Konzentrat der unlöslichen Bestandteile aus der ersten Stufe der Flotation unlöslicher Bestandteile einem Eindicker zugeführt. Die zweiten Flotationsberge werden dem Flotationskreislauf für Sylvinit zugeführt, worin Sylvin von anderen Kalirohsalz-Komponenten unter Verwendung eines geeigneten Sammlers flotiert wird.

### Beispiele

Das für die Flotationsversuche verwendete Sylvinit war bereits ausreichend zerkleinert. Ein Teil des Sylvinits wurde in Wasser mit Raumtemperatur unter ständigem Rühren gelöst, um 50 L einer gesättigten Mutterlauge herzustellen. Es wurde soviel Salz hinzugegeben, bis eine gesättigte Salzlösung mit Bodensatz entstand. Nach 24 Stunden Standzeit wurde die übersättigte Lösung mittels eines Faltenfilters abfiltriert. Das Filtrat wurde für die Flotationsversuche verwendet. Die Mutterlauge wurde bei gleichmäßiger Temperatur gelagert, um ein Ausfallen von Salz zu vermeiden. Das von der Gesamtmenge verbliebene Sylvinit wurde homogenisiert und in repräsentative Proben ä 745 g geteilt. Die Proben enthielten 9,3 Gew.-% unlösliche Bestandteile. Die Flotationsversuche wurden mit einer Flotationsmaschine vom Typ KHD durchgeführt. Dazu wurde das Salz in eine 3 L Kunststoffzelle gegeben, und mit Wasser auf das volle Volumen aufgefüllt. Anschließend wurde die Flotationsmaschine eingeschaltet und der Rührer auf 1600 RPM einjustiert. Nach 1 min Konditionierdauer ohne Reagenzien wurde zuerst das Flockungsmittel aus 0,1 % iger Lösung dosiert und 1 min konditioniert. Anschließend wurde der Schäumer unverdünnt zugegeben und eine weitere Minute konditioniert. Danach wurde die Flotationtrübe durch Öffnen des Luftansaugventils an der Flotationsmaschine belüftet und der Schaum von der Oberfläche der Flotationstrübe abgeschöpft. Nach 4 min Flotationsdauer war die Flotation abgeschlossen. Das Schaumprodukt wurde abfiltriert, mit Ethanol nachgespült und bei 108 °C getrocknet. Das Kammerprodukt wurde abfiltriert, mit Ethanol nachgespült und bei 108 °C getrocknet. Auf diese Weise wurden die Angaben zur Masse von Schaum- und Kammerprodukt erhalten. Der Anteil an unlöslichen Bestandteilen wurde ermittelt, indem eine repräsentative Probe des Schaumproduktes und des Kammerprodukts in entionisiertem Wasser gelöst wurde. Nach anschließendem Abfiltrieren der Lösung und Trocknen des Filterkuchens bei 108 °C wurde der Rückstand auf einer Analysenwaage ausgewogen. Der prozentuale Anteil der unlöslichen Bestandteile ergibt sich aus den Massen der unlöslichen Bestandteile und den Massen von Schaum- bzw. Kammerprodukt.

Das Ausbringen an unlöslichen Bestandteilen in % ergibt sich aus dem Verhältnis der Masse der unlöslichen Bestandteile des Schaumprodukts zur Masse der unlöslichen Bestandteile der gesamten Flotationsaufgabe.

Das Wertmineral Sylvin befindet sich im Kammerprodukt. Wünschenswert ist ein Ergebnis, bei dem der Anteil unlöslicher Bestandteile im Schaumprodukt und das Ausbringen an unlöslichen Bestandteilen zugleich möglichst groß sind.

Unter diesen Versuchsbedingungen wurden die folgenden Resultate erhalten.

**Tabelle 1: Zusammensetzung der Schäumer S1 - S7**

| Bestandteil | Gew.-% in | | | | | | |
|---|---|---|---|---|---|---|---|
| | S1 | S2 | S3 | S4 | S5 | S6 | S7 |
| Polypropylenglykol 200 g/mol | 75 | 75 | 75 | 75 | 75 | 75 | 0 |
| Di-2-ethylhexylether | 4,1 | 25 | 0 | 12,5 | 10 | 10 | 16 |
| 2-Ethylhexylsäure-2-Ethylhexylester | 4,3 | 0 | 0 | 0 | 0 | 0 | 17 |
| C₁₆-Lactone | 3,5 | 0 | 0 | 0 | 0 | 0 | 14 |
| 2-Ethylhexylbutyrat | 1,1 | 0 | 25 | 12,5 | 10 | 10 | 5 |
| 2-Ethylhexandiol-(1,3)-mono-n-butyrat | 2,6 | 0 | 0 | 0 | 0 | 0 | 11 |
| 2-Ethylhexanol | 1,2 | 0 | 0 | 0 | 5 | 0 | 5 |
| C₄-bis C₆-Acetate | 0,7 | 0 | 0 | 0 | 0 | 0 | 3 |
| 2-Ethylhexandiol-(1,3) | 1,1 | 0 | 0 | 0 | 0 | 5 | 4 |
| Ether und Ester > C₂₀ | 2,3 | 0 | 0 | 0 | 0 | 0 | 9 |
| Andere | 4,1 | 0 | 0 | 0 | 0 | 0 | 16 |

**Tabelle 2: Ergebnisse der Flotationsversuche**

| | | Beispiel | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13(V) | 14(V) |
| Schäumer | | S1 | S1 | S1 | S1 | S1 | S2 | S3 | S4 | S5 | S6 | S7 | VS1 | VS2 | VS2 |
| Menge Schäumer | (g/t) | 10 | 30 | 50 | 50 | 50 | 30 | 50 | 70 | 100 | 150 | 50 | 30 | 30 | 50 |
| Menge Flockungsmittel | (g/t) | 7 | 7 | 7 | 1 | 50 | 10 | 10 | 10 | 10 | 10 | 7 | 7 | 7 | 1 |
| Masse Schaumprodukt | (g) | 50,1 | 61,4 | 78,0 | 50,4 | 223,0 | 70,6 | 73,8 | 81,9 | 119,2 | 218,2 | 57,8 | 71,6 | 51,9 | 44,7 |
| Masse Kammerprodukt | (g) | 694,9 | 683,6 | 667,0 | 694,6 | 522,0 | 674,5 | 671,2 | 663,1 | 625,8 | 526,8 | 687,2 | 673,4 | 693,1 | 700,3 |
| UB Schaumprodukt | (Gew.-%) | 31,5 | 78,3 | 63,2 | 34,1 | 20,3 | 72,4 | 67,5 | 60,3 | 40,8 | 22,1 | 71,1 | 18,7 | 69,4 | 32,8 |
| UB Kammerprodukt | (Gew.-%) | 7,7 | 3,1 | 3,0 | 7,5 | 4,6 | 2,7 | 2,9 | 3 | 3,3 | 4 | 4,1 | 8,3 | 4,8 | 7,8 |
| Ausbringen UB | (%) | 22,7 | 69,4 | 71,1 | 24,8 | 65,3 | 73,7 | 71,9 | 71,3 | 70,2 | 69,6 | 59,3 | 19,3 | 52,0 | 21,2 |

| | | | | | | | | | | | | | | | |
|---|---|---|---|---|---|---|---|---|---|---|---|---|---|---|---|
| UB = unlösliche Bestandteile VS1 = Vergleichssammler (hydriertes Talgfettamin) VS2 = Vergleichsschäumer (Pine Oil) Flockungsmittel = Hengfloc^{®} 70014, ein nichtionisches Polyacrylamid | | | | | | | | | | | | | | | |

In Tabelle 2 sind Flotationsversuche mit dem erfindungsgemäßen Schäumer solchen Versuchen gegenüber gestellt, die mit Sammlern und Schäumern des Standes der Technik durchgeführt wurden. VS1 ist ein Vergleichssammler, VS2 ist ein Vergleichsschäumer. Bei dem Verfahren mit VS1 fällt das Wertmineral Sylvin als Schaumprodukt an, bei den Versuchen mit VS2 als Kammerprodukt. UB Schaumprodukt und Ausbringen sind bei Verwendung von VS1 in jedem Fall schlechter als im erfindungsgemäßen Verfahren. Vergleichsversuch 12(V) ist mit dem erfindungsgemäßen Beispiel 2, Vergleichsversuch 13(V) ist mit dem erfindungsgemäßen Beispiel 4 zu vergleichen. Es wird deutlich, dass die erfindungsgemäßen Beispiele gegenüber den Vergleichsbeispielen deutlich verbesserte Anteile unlöslicher Bestandteile im Schaumprodukt und Ausbringen aufweisen.

## Patentansprüche

1. Verfahren zur Abtrennung unlöslicher Bestandteile aus Sylvinit, indem der Sylvinit in gesättigter Salzlauge suspendiert wird, der Suspension ein Flockungsmittel zugesetzt wird, und der so erhaltenen Zusammensetzung sodann ein Schäumer zugesetzt wird, und eine Schaumaufbereitung zur Entfernung eines Konzentrats, welches die unlöslichen Bestandteile enthält, durchgeführt wird, **dadurch gekennzeichnet, dass** der Schäumer mindestens einen Ether und/oder Ester enthält, wobei
a) die Ether der Formel 1 entsprechen
R-O-R' (1)
worin R für lineare oder verzweigte Alkyl- oder Alkenylgruppen mit 2 bis 30 Kohlenstoffatomen und R' für lineare oder verzweigte Alkyl- oder Alkenylgruppen mit 1 bis 30 Kohlenstoffatomen steht,
b) die Ester sich von ein- oder mehrwertigen Carbonsäuren mit 2 bis 30 Kohlenstoffatomen und von ein- oder mehrwertigen Alkoholen mit 1 bis 30 Kohlenstoffatomen ableiten, oder
c) die Ether und/oder Ester cyclisch sind, wobei die Ringgröße von 6 bis 30 Kohlenstoffatomen beträgt.

2. Verfahren nach Anspruch 1, worin der Schäumer zusätzlich mindestens ein Polypropylenglykol enthält.

3. Verfahren nach Anspruch 2, wobei das Polypropylenglykol ein zahlenmittleres Molekulargewicht von 100 bis 5.000 g/mol aufweist.

4. Verfahren nach einem oder mehrere der Ansprüche 1 bis 3, wobei die Reste R und/oder der Säurerest 4 bis 22 und die Reste R' und/oder der Alkoholrest 2 bis 22 Kohlenstoffatome umfassen.

5. Verfahren nach einem oder mehreren der Ansprüche 1 bis 4, worin R und R' bzw. der Säurerest und der Alkoholrest einen Ring mit 8 bis 22 Ringgliedern bilden.

6. Verfahren nach einem oder mehreren der Ansprüche 1 bis 5, worin die Ether oder Ester ausgewählt sind aus Dihexylether, Dioctylether, Di-(2-Ethylhexyl)ether, Ölsäure-Eicosylester, 2-Ethylhexylstearat, 2-Ethylhexylsäurebutyrat, Octansäureethylester, Hexansäureethylester, 2-Ethylhexylsäurebutylester, 2-Ethylhexylbutyrat und 2-Ethylhexylsäure-2-Ethylhexylester, Adipinsäure-di(2-Ethylhexyl-ester), 2-Ethylhexandiol-(1,3)-mono-n-butyrat, 2-Ethylhexandiol-(1,3)-di-n-butyrat.

7. Verfahren nach einem oder mehreren der Ansprüche 1 bis 6, worin neben mindestens einem Ether und/oder Ester noch mindestens einen Alkohol, der einen Kohlenwasserstoffrest von 6 bis 16 Kohlenstoffatomen trägt, zur Anwendung kommt.

8. Verfahren nach Anspruch 7, worin der Alkohol ein ein- oder zweiwertiger Alkohol ist.

9. Verfahren nach einem oder mehreren der Ansprüche 2 bis 7, worin das Mischungsverhältnis von Ester/Ether und ggf. Alkohol zu Polypropylenglykol zwischen 1:10 und 10:1 nach Gewicht liegt.

10. Verfahren nach einem oder mehreren der Ansprüche 1 bis 9, worin MS als Schäumerbestandteil zur Anwendung kommt, und wobei MS der Zusammensetzung
| Bestandteil | Konzentrationsbereich (Gew.-%) |
|---|---|
| Di-2-ethylhexylether | 10-25 |
| 2-Ethylhexylsäure-2-Ethylhexylester | 10-25 |
| C₁₆-Lactone | 4-20 |
| 2-Ethylhexylbutyrat | 3-10 |
| 2-Ethylhexandiol-(1,3)-mono-n-butyrat | 5-15 |
| 2-Ethylhexanol | 4-10 |
| C₄- bis C₆-Acetate | 2-10 |
| 2-Ethylhexandiol-(1,3) | 2- 5 |
| Ether und Ester > C₂₀ | 0-20 |
entspricht.

11. Verfahren nach einem oder mehreren der Ansprüche 1 bis 10, worin das Flockungsmittel aus Acrylamidpolymeren ausgewählt ist.

12. Verfahren nach einem oder mehreren der Ansprüche 1 bis 11, worin der Schäumer in einer Menge von 0,4 bis 150 g/Tonne Rohsalz aufgegeben wird.

13. Verfahren nach einem oder mehreren der Ansprüche 1 bis 12, worin das Flockungsmittel in einer Menge von 0,1 bis 100 g/Tonne Rohsalz aufgegeben wird.

14. Verfahren zur Flotation von Sylvinit, umfassend
A) ein Verfahren zur Abtrennung unlöslicher Bestandteile aus Sylvinit nach Anspruch 1, und
B) Flotation des Sylvins durch Zugabe eines Sammlers und Schäumers für die Sylvinitflotation.

15. Verwendung eines Schäumers in der Flotation der unlöslichen Bestandteile des Sylvinits, **dadurch gekennzeichnet, dass** der Schäumer mindestens einen Ether und/oder Ester enthält, wobei
a) die Ether der Formel 1 entsprechen
R-O-R' (1)
worin R für lineare oder verzweigte Alkyl- oder Alkenylgruppen mit 2 bis 30 Kohlenstoffatomen und R' für lineare oder verzweigte Alkyl- oder Alkenylgruppen mit 1 bis 30 Kohlenstoffatomen steht,
b) die Ester sich von ein- oder mehrwertigen Carbonsäuren mit 2 bis 30 Kohlenstoffatomen (Säurerest) und von ein- oder mehrwertigen Alkoholen mit 1 bis 30 Kohlenstoffatomen (Alkoholrest) ableiten, oder
c) die Ether und/oder Ester cyclisch sind, wobei die Ringgröße von 6 bis 30 Kohlenstoffatomen beträgt.

## Claims

1. A method for separating off insoluble components from sylvinite by suspending the sylvinite in saturated salt lye, adding a flocculant to the suspension, and then adding a frother to the resultant composition, and carrying out a froth treatment to remove a concentrate which contains the insoluble components, **characterized in that** the frother contains at least one ether and/or ester, wherein
a) the ethers correspond to formula 1
R-O-R' (1)
where R is linear or branched alkyl or alkenyl groups having 2 to 30 carbon atoms and R' is linear or branched alkyl or alkenyl groups having 1 to 30 carbon atoms,
b) the esters are derived from monobasic or polybasic carboxylic acids having 2 to 30 carbon atoms and monohydric or polyhydric alcohols having 1 to 30 carbon atoms, or
c) the ethers and/or esters are cyclic, wherein the ring size is from 6 to 30 carbon atoms.

2. The method as claimed in claim 1, where the frother additionally contains at least one polypropylene glycol.

3. The method as claimed in claim 2, wherein the polypropylene glycol has a number-average molecular weight of 100 to 5000 g/mol.

4. The method as claimed in one or more of claims 1 to 3, wherein the radicals R and/or the acid radical comprise 4 to 22 carbon atoms and the radicals R' and/or the alcohol radical comprise 2 to 22 carbon atoms.

5. The method as claimed in one or more of claims 1 to 4, where R and R' or the acid radical and the alcohol radical form a ring having 8 to 22 ring members.

6. The method as claimed in one or more of claims 1 to 5, where the ethers or esters are selected from the group consisting of dihexyl ether, dioctyl ether, di-(2-ethylhexyl) ether, oleic acid eicosyl ester, 2-ethylhexyl stearate, 2-ethylhexylic acid butyrate, octanoic acid ethyl ester, hexanoic acid ethyl ester, 2-ethylhexylic acid butyl ester, 2-ethylhexyl butyrate and 2-ethylhexylic acid 2-ethylhexyl ester, adipic acid di(2-ethylhexyl ester), 2-ethylhexane-(1,3)-diol mono-n-butyrate, 2-ethylhexane-(1,3)-diol di-n-butyrate.

7. The method as claimed in one or more of claims 1 to 6, where, in addition to at least one ether and/or ester, in addition at least one alcohol which carries a hydrocarbon radical of 6 to 16 carbon atoms is used.

8. The method as claimed in claim 7, where the alcohol is a monohydric or dihydric alcohol.

9. The method as claimed in one or more of claims 2 to 7, where the mixing ratio of ester/ether and optionally alcohol to polypropylene glycol is between 1:10 and 10:1 by weight.

10. The method as claimed in one or more of claims 1 to 9, where MS is used as frother component, and where MS corresponds to the composition
| Component | Concentration range (% by wt) |
|---|---|
| Di-2-ethylhexyl ether | 10 - 25 |
| 2-Ethylhexylic acid 2-ethylhexyl ester | 10 - 25 |
| C₁₆-Lactones | 4 - 20 |
| 2-Ethylhexyl butyrate | 3 - 10 |
| 2-Ethylhexane-(1,3)-diol mono-n-butyrate | 5 - 15 |
| 2-Ethylhexanol | 4 - 10 |
| C₄- to C₆ acetates | 2 - 10 |
| 2-Ethylhexane-(1,3)-diol | 2 - 5 |
| Ethers and esters > C₂₀ | 0 - 20 |

11. The method as claimed in one or more of claims 1 to 10, where the flocculant is selected from acrylamide polymers.

12. The method as claimed in one or more of claims 1 to 11, where the frother is applied in an amount of 0.4 to 150 g/ton of crude salt.

13. The method as claimed in one or more of claims 1 to 12, where the flocculant is applied in an amount of 0.1 to 100 g/ton of crude salt.

14. A method for the flotation of sylvinite, which comprises
A) A method for separating off insoluble components from sylvinite as claimed in claim 1, and
B) flotation of the sylvine by adding a collector and frother for the sylvinite flotation.

15. The use of a frother in the flotation of the insoluble components of sylvinite, wherein the frother contains at least one ether and/or ester, wherein
a) the ethers correspond to formula 1
R-O-R' (1)
where R is linear or branched alkyl or alkenyl groups having 2 to 30 carbon atoms and R' is linear or branched alkyl or alkenyl groups having 1 to 30 carbon atoms,
b) the esters are derived from monobasic or polybasic carboxylic acids having 2 to 30 carbon atoms (acid radical) and monohydric or polyhydric alcohols having 1 to 30 carbon atoms (alcohol radical), or
c) the ethers and/or esters are cyclic, wherein the ring size is from 6 to 30 carbon atoms.

## Revendications

1. Procédé de séparation de constituants insoluble de sylvinite, selon lequel la sylvinite est suspendue dans une lessive saline saturée, un agent de floculation est ajouté à la suspension, puis un agent moussant est ajouté à la composition ainsi obtenue, et un conditionnement de la mousse pour l'élimination d'un concentré qui contient les constituants insolubles est réalisé, **caractérisé en ce que** l'agent moussant contient au moins un éther et/ou un ester,
a) l'éther correspondant à la formule 1
R-O-R' (1)
dans laquelle R représente des groupes alkyle ou alcényle linéaires ou ramifiés de 2. à 30 atomes de carbone, et R' représente des groupes alkyle ou alcényle linéaires ou ramifiés de 1 à 30 atomes de carbone,
b) les esters dérivant d'acides carboxyliques mono-ou polyvalents de 2 à 30 atomes de carbone et d'alcools mono- ou polyvalents de 1 à 30 atomes de carbone, ou
c) les éthers et/ou esters étant cycliques, la taille de cycle étant de 6 à 30 atomes de carbone.

2. Procédé selon la revendication 1, dans lequel l'agent moussant contient en outre au moins un polypropylène glycol.

3. Procédé selon la revendication 2, dans lequel le polypropylène glycol présente un poids moléculaire moyen en nombre de 100 à 5 000 g/mol.

4. Procédé selon une ou plusieurs des revendications 1 à 3, dans lequel les radicaux R et/ou le radical acide comprennent 4 à 22 et les radicaux R' et/ou le radical alcool 2 à 22 atomes de carbone.

5. Procédé selon une ou plusieurs des revendications 1 à 4, dans lequel R et R' ou le radical acide et le radical alcool forment un cycle de 8 à 22 éléments de cycle.

6. Procédé selon une ou plusieurs des revendications 1 à 5, dans lequel les éthers ou esters sont choisis parmi l'éther dihexylique, l'éther dioctylique, l'éther di-(2-éthylhexylique), l'ester eicosylique de l'acide oléique, le stéarate de 2-éthylhexyle, le butyrate de l'acide 2-éthylhexylique, l'ester éthylique de l'acide octanoïque, l'ester éthylique de l'acide hexanoïque, l'ester butylique de l'acide 2-éthylhexylique, le butyrate de 2-éthylhexyle et l'ester 2-éthylhexylique de l'acide 2-éthylhexylique, l'ester di(2-éthylhexylique) de l'acide adipique, le mono-n-butyrate de 2-éthylhexanediol-(1,3), le di-n-butyrate de 2-éthylhexanediol-(1,3).

7. Procédé selon une ou plusieurs des revendications 1 à 6, dans lequel en plus d'au moins un éther et/ou ester, également au moins un alcool, qui porte un radical hydrocarboné de 6 à 16 atomes de carbone, est utilisé.

8. Procédé selon la revendication 7, dans lequel l'alcool est un alcool mono- ou bivalent.

9. Procédé selon une ou plusieurs des revendications 2 à 7, dans lequel le rapport de mélange entre l'ester/éther et éventuellement l'alcool et le polypropylène glycol est compris entre 1:10 et 10:1 en poids.

10. Procédé selon une ou plusieurs des revendications 1 à 9, dans lequel MS est utilisé en tant que constituant de l'agent moussant, et MS correspond à la composition
| Constituant | Plage de concentration (% en poids) |
|---|---|
| Éther di-2-éthylhexylique | 10-25 |
| Ester 2-éthylhexylique de l'acide 2-éthylhexylique | 10-25 |
| Lactones en C₁₆ | 4-20 |
| Butyrate de 2-éthylhexyle | 3-10 |
| Mono-n-butyrate de 2-éthylhexanediol-(1,3) | 5-15 |
| 2-Éthylhexanol | 4-10 |
| Acétates en C₄ à C₆ | 2-10 |
| 2-Éthylhexanediol-(1,3) | 2-5 |
| Éthers et esters > C₂₀ | 0-20 |

11. Procédé selon une ou plusieurs des revendications 1 à 10, dans lequel l'agent de floculation est choisi parmi les polymères d'acrylamide.

12. Procédé selon une ou plusieurs des revendications 1 à 11, dans lequel l'agent moussant est ajouté en une quantité de 0,4 à 150 g/tonne de sel brut.

13. Procédé selon une ou plusieurs des revendications 1 à 12, dans lequel l'agent de floculation est ajouté en une quantité de 0,1 à 100 g/tonne de sel brut.

14. Procédé de flottation de sylvinite, comprenant :
A) un procédé de séparation des constituants insolubles de la sylvinite selon la revendication 1, et
B) la flottation de la sylvinite par ajout d'un collecteur et d'un agent moussant pour la flottation de la sylvinite.

15. Utilisation d'un agent moussant dans la flottation des constituants insolubles de la sylvinite, **caractérisée en ce que** l'agent moussant contient au moins un éther et/ou un ester,
a) l'éther correspondant à la formule 1
R-O-R' (1)
dans laquelle R représente des groupes alkyle ou alcényle linéaires ou ramifiés de 2 à 30 atomes de carbone, et R' représente des groupes alkyle ou alcényle linéaires ou ramifiés de 1 à 30 atomes de carbone,
b) les esters dérivant d'acides carboxyliques mono-ou polyvalents de 2 à 30 atomes de carbone (radical acide) et d'alcools mono- ou polyvalents de 1 à 30 atomes de carbone (radical alcool), ou
c) les éthers et/ou esters étant cycliques, la taille de cycle étant de 6 à 30 atomes de carbone.
